# EUROPEAN PATENT SPECIFICATION

(11) **EP 1 020 872 B1**
(45) Date of publication and mention of the grant of the patent: **29.07.2009**
(21) Application number: 00850001.9
(22) Date of filing: 07.01.2000
(51) Int. Cl.: G21C 3/326, G21C 3/328

(54) **Fuel assembly for a nuclear boiling water reactor**
Brennstabbündel für Siedewasserkernreaktor
Assemblage de combustible pour réacteur nucléaire à eau bouillante

(30) Priority: 15.01.1999 SE 9900107
(43) Date of publication of application: 19.07.2000
(73) Proprietor: Westinghouse Electric Sweden AB, 721 63 Västerås (SE)
(72) Inventor: Helmersson, Sture, 73040 Kolbäck (SE)
(74) Representative: Berglund, Stefan

(56) References cited:
- EP-A- 0 336 203
- EP-A- 0 590 617
- EP-A- 0 786 781
- US-A- 4 968 479
- US-A- 5 202 085
- US-A- 5 544 211
- DATABASE WPI Section Ch, Week 199621 Derwent Publications Ltd., London, GB; Class K06, AN 1996-208081 XP002370009 -& SE 9 501 627 L (ABB ATOM AB) 20 February 1996 (1996-02-20)

## Description

### BACKGROUND OF THE INVENTION AND PRIOR ART

The present invention concerns a fuel assembly for a nuclear boiling water reactor, which fuel assembly is constructed to be provided in the nuclear boiling water reactor such that the fuel assembly extends in essentially vertical direction, wherein the fuel assembly comprises a plurality of fuel rods which comprise enriched nuclear fuel material, wherein a part of said fuel rods are full length fuel rods, which extend from essentially a first level located in a lower part of the fuel assembly to essentially a second level located in an upper part of the fuel assembly, and another part of said fuel rods are part length fuel rods, which extend essentially from said first level and upwards but do not reach as high up in the fuel assembly as the full length fuel rods.

In a fuel assembly for a nuclear boiling water reactor, there are a number of fuel rods, which comprise a nuclear fuel material. When the fuel assembly is in operation in a nuclear reactor, a cooling medium, usually water, flows through the fuel assembly. This water fulfils several functions. On one hand, it functions as a cooling medium for cooling the fuel rods such that they will not be overheated. On the other hand, the water serves as a neutron moderator, i.e. the water slows down the neutrons to a lower speed. Thereby, the reactivity of the reactor is increased. Furthermore, it is the case that the water flows through the fuel assembly from below upwards.

In the upper part of the fuel assembly, the water has therefore been heated to a larger extent. This has as a consequence that the portion of steam is larger in the upper part of the fuel assembly than in the lower part. Since steam has a relatively low density, the steam in the upper part of the fuel assembly is a poorer moderator than the water in the lower part of the fuel assembly. Furthermore, it is the case that cold water is a better moderator than warm water. This means that the largest moderation is obtained when the reactor is out of operation, i.e. when it is cool. The reactivity of a reactor depends on the amount of nuclear fuel material and on the amount of moderator. The reactivity in a cool reactor is thereby higher than the reactivity in a warm reactor. For security reasons, there are requirements on a highest allowed reactivity when the reactor is out of operation. An aim is thus that the reactor has a reactivity as high as possible when the reactor is in operation at the same time as the reactivity may not be too high when the reactor is out of operation. Another requirement is that the cooling of the fuel rods is sufficient such that a so-called dry-out does not occur. Dry-out means that the water film which exists on the surface of the fuel rods disappears or is broken in limited areas. This leads to a locally deteriorated heat transfer between the fuel rod and the water flowing through the fuel assembly. This leads in its turn to an increased wall temperature of the fuel rods. The increased wall temperature may lead to serious damages on the fuel rod.

It should be mentioned that the water does not only have a moderating function. The water functions in fact also as a neutron absorber. In this context, the expression over-moderation is often used. Thereby is meant that the absorbing function of the water dominates over its moderating function. Such an over-moderation thus leads to a lowered reactivity. This means, however, that the requirement on a highest allowed reactivity when the reactor is out of operation is more easily fulfilled if the amount of water leads to over-moderation.

In order to fulfil the different security requirements, to obtain a sufficient cooling of the fuel rods, and, at the same time, to obtain a high reactivity during operation, a large number of different technical solutions have been proposed.

The published Swedish patent application No. 9501627 relates primarily to the problem of securing a sufficiently low reactivity when the reactor is out of operation, at the same time as a high reactivity is obtained when the reactor is in operation. According to this document it is thus strived for an over-moderation when the reactor is out of operation at the same time as this over-moderation is avoided when the reactor is warm. It is common that a fuel assembly has a centrally located water channel, through which non-boiling water flows upwards through the fuel assembly. Said Swedish patent application concerns this kind of fuel assembly. As a solution to said problem, it is suggested in this patent application that a number of shorter fuel rods, so-called part length rods, are arranged closest to the central water channel in the fuel assembly. These rods do not reach as high up in the fuel assembly as the fuel rods, which are arranged around the part length rods. In this manner, a central, large, continuous water-filled area is formed in the upper part of the fuel assembly. This leads to the fact that the fuel assembly, when the reactor is cool, is strongly over-moderated. When the reactor is warm, the portion of steam is however large in the upper part. Thereby, the over-moderation vanishes. In this manner, a high reactivity is achieved when the reactor is warm at the same time as a sufficiently low reactivity is the case when the reactor is out of operation.

SE-B-470 485 relates primarily to the problem of avoiding a dry-out at the same time as a high effect is achieved. This problem is solved, according to said document, by a relatively complicated distribution of the enrichment of the nuclear fuel material. The enrichment thus depends on the position of the fuel rod in the fuel assembly and the enrichment varies also along the longitudinal direction of the fuel rod. This patent document does not mention the possibility of arranging so-called part length rods in the fuel assembly.

SE-C2-505 739 describes a fuel assembly with a number of so-called part length fuel rods and a number of fuel rods of full length, so-called full length fuel rods. The patent document primarily relates to the problem of avoiding the risk for a dry-out. This is achieved, according to the patent document, in that the flow of the cooling medium is locally decreased along the part length fuel rods. This is achieved in that flow-preventing members are arranged in the lower part of the fuel assembly in the area around the part length fuel rods.

US-A-5 202 085 shows that the moderation in the upper part of a fuel assembly may be increased by the fact that the water channel, through which non-boiling water flows, is wider in the upper part of the fuel assembly than in the lower part. Part length fuel rods are arranged next to the lower part of said water channel. The part length rods have a low enrichment of nuclear fuel material.

The above mentioned documents solve the different problems which have been mentioned in connection with a fuel assembly for a nuclear reactor by different more or less complicated constructions. There is therefore room for improving and simplifying a fuel assembly which fulfils the requirements called for.

### SUMMARY OF THE INVENTION

The purpose of the present invention is to achieve a fuel assembly, which by relatively simple means makes it possible to attain a high reactivity when it is used in operation at the same time as the risk for a dry-out is minimised and at the same time as the reactivity is sufficiently low when the reactor is out of operation, i.e. a good shutdown margin is the case.

A further purpose of the invention is to reduce the risk for a dry-out in a reactor which comprises part length fuel rods.

These purposes are achieved with the initially defined fuel assembly, which is characterised in that at least a part of the full length fuel rods, which are arranged closest to part length fuel rods, comprise nuclear fuel material with an average enrichment in the upper part of the fuel rod which is lower than an average enrichment in the lower part of the fuel rod. The full length fuel rods, which are arranged closest to the part length fuel rods, are hereinafter also called the neighbour rods. Since the part length rods do not reach as high up in the fuel assembly, there is above these part length rods a larger space with water or water steam. This means that there is, relatively seen, quite much water close to the upper part of the neighbour rods. These neighbour rods thus get a very good moderation in the upper part. This leads to an increase in effect. The effect increase has as a consequence that the risk for a dry-out increases. This risk is thus, according to the invention, compensated for in that the enrichment has been lowered in the upper part of the neighbour rods. The effect in the upper part of the fuel rods is thereby lowered, which leads to a lower risk of a dry-out.

According to an embodiment of the invention, the fuel assembly comprises at least one essentially vertically arranged water channel, through which non-boiling water is intended to flow from below upwards, wherein at least a number of the part length fuel rods are provided next to said water channel. With the expression "next to" is here meant that there are no rods, which are provided between the mentioned part length rods and the water channel. A larger continuous water-filled area is thereby formed by the space above the part length fuel rods and by the neighbouring water channel. In this way, an over-moderation is achieved when the reactor is cool, at the same time as a high reactivity may be the case when the reactor is warm. Since part length rods are provided next to the water channel, it is thus guaranteed that the reactivity is not too high in a reactor which is out of operation. This means that an improved so-called shutdown margin is thereby achieved. The idea to provide part length rods next to the water channel is as such known from the mentioned published Swedish patent application No. 9501627.

In an advantageous embodiment of the invention, said water channel has a horizontal cross-sectional area, which is essentially constant along the length of the water channel. Since the cross-sectional area is essentially constant, said water channel may be produced in a relatively simple manner, at the same time as the water channel has good flow characteristics.

According to another embodiment of the invention, said water channel has a horizontal cross-sectional area, which is larger in the upper part of the water channel than in its lower part, wherein part length fuel rods are provided closest to the lower part of the water channel. Since the water channel is wider in the upper part, the portion of non-boiling water is increased in the upper part. The moderation is thereby improved in the upper part of the fuel assembly.

According to a further embodiment of the invention, said water channel is provided centrally in the fuel assembly. This allows for a symmetrical construction of the fuel assembly.

According to a further embodiment of the invention, the fuel assembly comprises at least two vertically arranged water channels, through which non-boiling water is intended to flow from below upwards. By having several such water channels, the moderation may be increased in different parts of the fuel assembly.

According to still another embodiment of the invention, the ratio between said average enrichment in the upper part of the fuel rod and said average enrichment in the lower part of the fuel rod is between 0.75 and 0.95, preferably between 0.8 and 0.9. It has become apparent that, by such a ratio, a high reactivity is achieved at the same time as the risk for a dry-out is low.

According to a further embodiment of the invention, the average enrichment in the upper part of such full length fuel rods, which are not provided closest to the part length fuel rods, is higher than the average enrichment in the upper part of such full length fuel rods, which are provided closest to part length fuel rods. The full length fuel rods, which are not provided closest to part length fuel rods, will get a lower moderation than the full length fuel rods, which are provided closest to part length fuel rods. Therefore, it may be allowed that the enrichment in such full length fuel rods, which are not provided closest to part length fuel rods, is higher than in the other full length fuel rods. Thereby, a high effect is achieved without increasing the risk for a dry-out.

According to another embodiment of the invention, at least a part of the part length fuel rods reach up to between 50% and 85% of the length of the full length rods. Such a length of the part length rods has appeared to be advantageous in order to achieve different desired characteristics of the fuel assembly, i.e. characteristics such as, for example, a high effect, a good shutdown margin, and a low risk for a dry-out. According to an advantageous embodiment, all part length rods have the same length. According to another advantageous embodiment, there are part length rods of different lengths. Preferably, a part of the part length fuel rods may thereby reach up to between 30% and 40% of the length of the full length rods, and a part of the part length rods may reach up to between 50% and 85% of the length of the full length rods. For example, 8 part length rods may reach up to about 2/3 of the length of the full length rods and 4 part length rods may reach up to about 1/3 of the length of the full length rods.

### BRIEF DESCRIPTION OF THE DRAWINGS

The present invention will now be explained by means of described embodiments given as examples and with reference to the annexed drawings.
- Fig. 1: shows schematically a sectional view of a fuel assembly through the line A-A in the figs. 2-5.
- Fig. 2: shows the fuel assembly of fig. 1 a view perpendicular to a horizontal plane through the line B-B in fig. 1.
- Fig. 3: shows an alternative embodiment of the fuel assembly through a similar cross-section as in fig. 2.
- Fig. 4: shows a similar cross-section of an alternative embodiment of the fuel assembly.
- Fig. 5: also shows a similar cross-section of an alternative embodiment of the fuel assembly.
- Fig. 6: shows a vertical section of an alternative embodiment of the fuel assembly.

### DETAILED DESCRIPTION OF EMBODIMENTS OF THE INVENTION

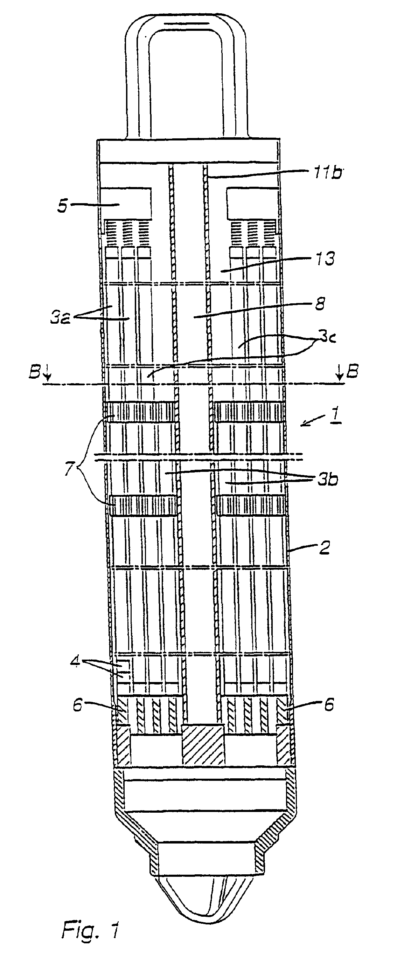

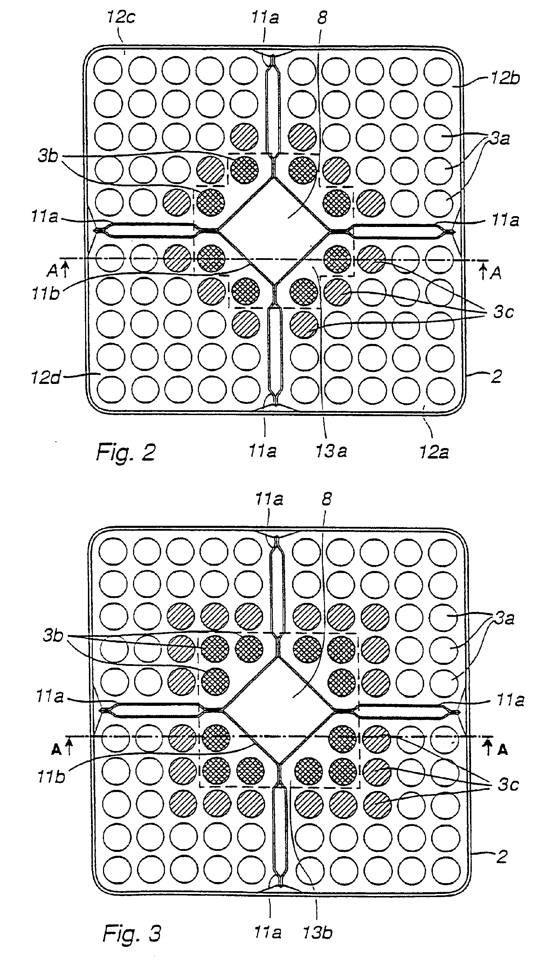

The invention will next be described with the help of fig. 1 and fig. 2. The figures show a fuel assembly 1. The fuel assembly comprises an encasing 2. An encasing is also called a box wall. In the fuel assembly 1, a number of fuel rods 3a, 3b, 3c are provided. The fuel rods 3 are usually arranged parallelly(ska vara parallel enl. stav.mall) to each other and extend in a vertical direction. It should, however, be mentioned that the fuel rods 3 do not necessarily have to be arranged vertically and parallelly* (parallel) to each other. There are also embodiments where the fuel rods 3 have a certain inclination, for example in order to achieve a desired deflection of the cooling water. The fuel rods 3 comprise pellets 4 of nuclear fuel material, usually in the form of uranium dioxide. The fuel rods 3 are kept in place with the help of a top plate 5 and a bottom plate 6. In the fuel assembly 1, a number of spacers 7 are provided. The spacers 7 have, inter alia, the function of keeping the fuel rods 3 in predetermined distances from each other. It may also in this context be mentioned that there are fuel assembly, where the fuel rods are kept in place only by means of spacers. Such fuel assemblies do thus not have any top plate and bottom plate with the same function as according to the shown embodiment.

In operation in a nuclear reactor, a cooling medium, usually, flows through the fuel assembly 1 from below upwards. The water is heated by the fuel rods 3 and in the upper part of the fuel assembly there is thus a large amount of water steam. The fuel assembly 1 also comprises a water channel 8, through which non-boiling water flows upwards through the fuel assembly 1. In the shown embodiment, the water channel 8 has a squared-shaped cross-section. In the shown embodiment, there are, furthermore, another four water channels 11a. These further water channels 11a function also as support members and are connected to the encasing 2. The wall of the water channel 8 is designated by 11b.

The plurality of the fuel rods 3 are in the shown embodiment so-called full length fuel rods 3a, 3c. This means that they extend through a larger part of the fuel assembly 1. The fuel assembly 1 also comprises a number of part length fuel rods 3b. The part length fuel rods 3b extend essentially from the same level in the lower part of the fuel assembly 1 from which the full length fuel rods 3a, 3c extend. The part length fuel rods 3b do however not reach as high up in the fuel assembly 1 as the full length fuel rods 3a, 3c. The part length fuel rods 3b suitably reach up to between 50% and 85% of the length of the full length fuel rods 3a, 3c. According to an advantageous embodiment, the part length fuel rods 3b reach up to between 60% and 70% of the length of the full length fuel rods 3a, 3c, preferably up to 2/3. In the shown embodiment, the part length fuel rods 3b are provided closest to the water channel 8. Above the part length fuel rods 3b, cooling water may thus flow. The space above the part length fuel rods 3b together with the neighbouring space in the water channel 8 thus forms a relatively large area. This area is in fig. 1 designated by 13 and in fig. 2 with 13a. When the reactor is out of operation, i.e. when it is cool, the space 13, 13a is filled with water. This gives a large over-moderation in the upper part of the fuel assembly 1 and a good shutdown margin is thereby achieved. Also when the reactor is in operation, i.e. when it is warm, there is more moderator in this central part 13, 13a of the fuel assembly 1 than in the part of the fuel assembly 1, which is located outside of the central part 13, 13a.

The full length fuel rods, which are arranged closest to the part length fuel rods 3b, are designated by 3c. These full length fuel rods 3c are below also called neighbour rods 3c. In the upper part of the fuel assembly 1 quite a large amount of water steam is formed during operation, as has been mentioned before. However, in the water channel 8 non-boiling water is present. Since the amount of moderator is relatively high close to the neighbour rods 3c, these neighbour rods 3c obtain a very good moderation. This means that a relatively seen high effect is achieved in the upper part of the neighbour rods 3c. Since the effect is high, the risk for a dry-out also increases. According to the present invention, the enrichment in the upper part of the neighbour rods 3c is therefore lowered, such that the average enrichment in the upper part of the neighbour rods 3c is lower than the average enrichment in the lower part of these fuel rods 3c. The increase in effect in the upper part of the neighbour rods 3c is thereby counteracted, which reduces the risk for a dry-out. By "upper part" is meant the part of the neighbour rod 3c, which is located above the level where the closest provided part length rods 3b end. It should be noted that when in this document the "length" or the "upper part" etc of a fuel rod is mentioned, it is, as the person skilled in the art understands, referred to the so-called active part of the fuel rod, i. e. the part of the fuel rod which actually comprises nuclear fuel material. By "average enrichment in the upper part of a neighbour rod 3c" is thus meant the average enrichment in the portion of the neighbour rod 3c which contains nuclear fuel material and which is located above the level at which the nuclear fuel material ends in one or more part length rods 3b located next to the neighbour rod 3c. It may also be noted that according to a preferred embodiment of the invention, the enrichment in each section of a neighbour rod 3c, which section is such that it is located between the level where one or more adjacent part length rods 3b end and the upper level where the nuclear fuel material ends in the neighbour rod 3c, is at least 50 % of the average enrichment in the lower part of the neighbour rod 3c. Preferably the neighbour rod 3c does not comprise any interposed section at all without any nuclear fuel material or with a nuclear fuel material with a very low enrichment. Preferably none of the fuel rods 3 comprises such an interposed section.

The enrichment in said upper part is suitably on the average between 75% and 95% of the enrichment in the lower part of the fuel rod 3c. Preferably, this portion is between 80% and 90%. It should in this context be noted that usually the fuel rods 3 comprise ²³⁵U as a fissile material. With enrichment is then meant the weight ratio ²³⁵U / (²³⁵U + ²³⁸U). A commonly existing enrichment is in the magnitude 5%. The full length fuel rods 3a, which are located further away from the water channel 8, are not as strongly moderated as the full length fuel rods 3c. Therefore, a corresponding increase in effect does not take place in the fuel rods 3a. The fuel rods 3c function as a screen for the fuel rods 3a, i.e. neutrons will to a certain extent be absorbed by the fuel rods 3c and are thus prevented from reaching the fuel rods 3a. The risk for a dry-out is thus not as large in the fuel rods 3a as in the fuel rods 3c. In order to achieve a high effect during operation, it is therefore suitable that the average enrichment in the upper part of the fuel rods 3a is higher than the average enrichment in the upper part of the fuel rods 3c. It should however be noted that the enrichment does not need to be constant in any of the fuel rods 3. The advantage with a varied enrichment has been described in the mentioned SE-B-470485. Furthermore, the enrichment in the upper part does not have to be the same in all fuel rods 3c. The enrichment may instead be adjusted to the increase in effect, which will be the case in each of the fuel rods 3c. It has become apparent that for the kind of fuel assembly, which is shown in figs. 1 and 2, an increase in effect of about 10% may arise in the upper part of the neighbour rods 3c (if the enrichment is constant along the whole fuel rod 3c). In order to compensate for such an increase in effect, the above mentioned degrees of enrichment may be suitable. It may also be noted that it is suitable that the lower enrichment in the neighbour rods 3c is started at approximately the level, where the part length fuel rods 3b end. The reduced enrichment may also be started somewhat lower than at this level, but it should not be started much over this level.

The embodiment according to fig. 3 is similar to that according to figs. 1 and 2. The embodiment according to fig. 3 differs however in that there are four further part length fuel rods 3b. The central relatively large water-filled area is in fig. 3 designated by 13b. The neighbour rods are also in this figure marked with 3c. It should be noted that the neighbour rods 3c, which are located furthest out in the corners of the square formation of neighbour rods 3c, achieve a somewhat lower moderation than the other neighbour rods 3c, since they are located further away from the water channel 8, and since they are partly screened by the neighbouring neighbour rods 3c. The enrichment in the upper part of these neighbour rods 3c, which are located in the corners, does therefore not need to be lowered to the same degree as the enrichment in the upper part of the neighbour rods 3c, which are not located in the corners.

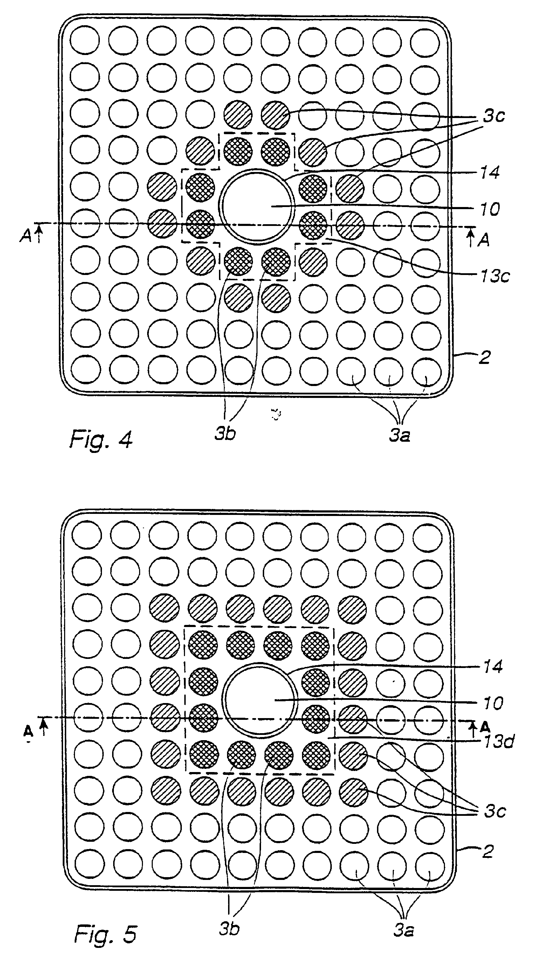

Fig. 4 shows a further embodiment of the invention. According to this embodiment, the water channel is designated by 10, and the wall of the water channel 10 is designated by 14. The central relatively large water-filled area is designated by 13c. The water channel 10 has, in this case, a circular cross-section. The part length fuel rods are also in this figure designated by 3b and the neighbour rods are designated by 3c. Also according to this embodiment, the upper part of at least a part of the neighbour rods 3c has a lower enrichment than the lower part of these rods 3c.

Fig. 5 shoes a further embodiment of the invention. The central relatively large water-filled area is here designated by 13d. This embodiment differs from the embodiment according to fig. 4 primarily in that there are more part length rods 3b. The neighbour rods 3c have also according to this embodiment a lower enrichment in their upper part than in their lower part.

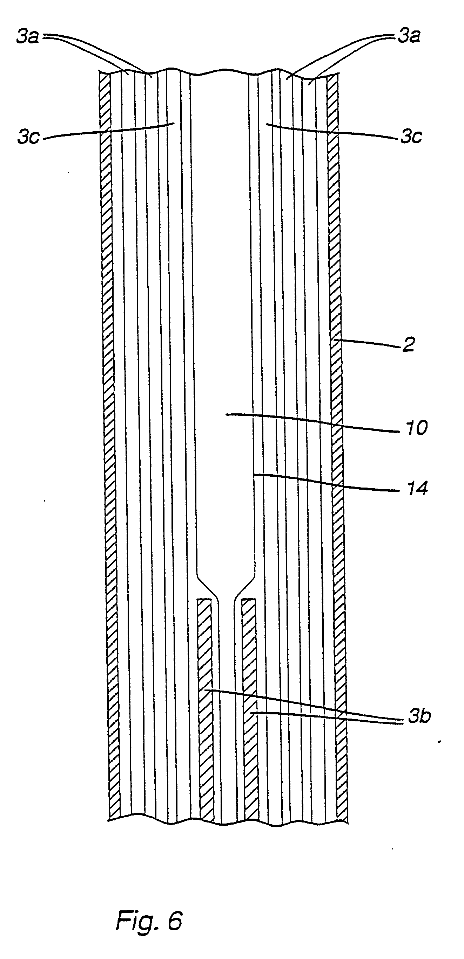

Fig. 6 shows a further embodiment of a fuel assembly according to the invention. According to this embodiment, the water channel 10 is wider in the upper part than in the lower part. Part length fuel rods 3b are provided closest to the lower part of the water channel 10. The neighbour rods 3c obtain, according to this embodiment, a particularly good moderation, since there is a relatively large amount of non-boiling water close to these neighbour rods 3c. Also according to this embodiment, the enrichment is therefore lowered in the upper part of the neighbour rods 3c. As in the previous embodiments, the enrichment is suitably lower from the level, where the part length fuel rods 3b end and upwards. Since it, according to this embodiment, is a relatively large amount of moderator close to the upper part of the neighbour rods 3c, the enrichment is suitably lowered somewhat more compared with the previous embodiments. In the embodiments according to figs. 1-5, the cross-sectional area of the water channel 8, 10 is thus essentially constant along the length of the water channel 8, 10. In the embodiment according to fig. 6, the cross-sectional area of the water channel 10 is, however, larger in the upper part of the water channel 10 than in its lower part. An advantage with the embodiment according to fig. 6 is, as has been explained, a better moderation in the upper part of the fuel assembly 1. A disadvantage with this embodiment is, however, that the larger cross-sectional area of the water channel 10 in the upper part of the fuel assembly 1 leads to an increased pressure drop in the upper part of the fuel assembly 1.

In the shown embodiments, there is only a larger water channel 8, 10 centrally located in the fuel assembly. Furthermore, in the embodiment according to figs. 1-3, smaller water channels 11a are provided. It is, however, also possible to provide several larger water channels 8, 10 at different positions in a fuel assembly. Part length fuel rods may in such a fuel assembly suitably be provided next to each larger water channel. Thereby, several groups of neighbour rods located next to the part length fuel rods are formed. It should also be noted that part length rods do not necessarily have to be provided next to a water channel. It is also possible that part length rods are provided in different positions, distributed across the fuel assembly. Even if the part length rods are not provided next to a water channel, a certain increase of the moderation in the neighbour rods to such part length fuel rods will take place. The increase in effect in such neighbour rods is however not as large as in neighbour rods which are located next to part length rods, which are located next to a water channel. The enrichment does therefore not need to be lowered as much in such neighbour rods, which are arranged next to part length fuel rods, which are not located next to a water channel. It should also be noted that the part length rods do not all have to have exactly the same length. Suitably, the part length rods reach up to between 50% and 85% of the length of the full length rods. They preferably reach up to between 60% and 80% of the length of the full length rods. According to an advantageous embodiment, all part length rods have the same length. According to another advantageous embodiment, there are part length rods of different lengths. Some of the part length rods may thereby preferably reach up to between 30% and 40% of the length of the full length rods and a part of the part length rods may reach up to between 50% and 85% of the length of the full length rods. Suitably, but not necessarily, the part length rods end at the level of or slightly above a spacer. According to an advantageous and relatively simple embodiment of the invention, all full length rods 3a, except for the neighbour rods 3c, have the same enrichment. This enrichment may also be constant along the length of the fuel rod 3a. Also according to a simple embodiment, the part length fuel rods 3b have a constant enrichment along their length. Also according to an advantageous embodiment, all neighbour rods 3c have the same degree of lowered enrichment in their upper parts.

The present invention is not limited to the shown embodiments but can be varied and modified within the scope of the following claims.

## Claims

1. Fuel assembly (1) for a nuclear boiling water reactor, which fuel assembly (1) is constructed to be provided in the nuclear boiling water reactor such that the fuel assembly (1) extends in essentially vertical direction, wherein the fuel assembly (1) comprises a plurality of fuel rods (3a, 3b, 3c) which comprise enriched nuclear fuel material, wherein a part of said fuel rods are full length fuel rods (3a, 3c) which extend from essentially a first level located in a lower part of the fuel assembly (1) to essentially a second level located in an upper part of the fuel assembly (1), and another part of said fuel rods are part length fuel rods (3b) which extend essentially from said first level and upwards but do not reach as high up in the fuel assembly (1) as the full length fuel rods (3a, 3c), **characterised in that** at least a part of the full length fuel rods (3c), which are arranged closest to part length fuel rods (3b), comprise nuclear fuel material with an average enrichment in the upper part of the fuel rod (3c) which is lower than an average enrichment in the lower part of the fuel rod (3c).

2. Fuel assembly (1) according to claim 1, **characterised in** at least one essentially vertically arranged water channel (8, 10) through which non-boiling water is intended to flow from below upwards, wherein at least a number of the part length fuel rods (3b) are provided next to said water channel (8, 10).

3. Fuel assembly (1) according to claim 2, **characterised in that** said water channel (8, 10) has a horizontal cross-sectional area which is essentially constant along the length of the water channel (8, 10).

4. Fuel assembly (1) according to claim 2, **characterised in that** said water channel (10) has a horizontal cross-sectional area which is larger in the upper part of the water channel (10) than in its lower part, wherein part length fuel rods (3b) are provided closest to the lower part of the water channel (10).

5. Fuel assembly (1) according to any of the claims 2-4, **characterised in that** said water channel (8, 10) is provided centrally in the fuel assembly (1).

6. Fuel assembly (1) according to any of the claims 2-4, **characterised in that** the fuel assembly (1) comprises at least two such vertically provided water channels (8, 10).

7. Fuel assembly (1) according to any of the preceding claims, **characterised in that** the ratio between said average enrichment in the upper part of the fuel rod (3c) and said average enrichment in the lower part of the fuel rod (3c) is between 0.75 and 0.95.

8. Fuel assembly (1) according to claim 7, **characterised in that** said ratio is between 0.80 and 0.90.

9. Fuel assembly (1) according to any of the preceding claims, **characterised in that** the average enrichment in the upper part of such full length fuel rods (3a) which are not provided closest to part length fuel rods (3b) is higher than the average enrichment in the upper part of such full length fuel rods (3c) which are provided closest to part length fuel rods.

10. Fuel assembly (1) according to any of the preceding claims, **characterised in that** at least a part of the part length fuel rods (3b) reach up to between 50% and 85% of the length of the full length fuel rods (3a, 3c).

## Patentansprüche

1. Brennstabbündel (1) für einen Siedewasserkemreaktor, bei welchen das Brennstabbündel (1), welches in dem Siedewasserkernreaktor vorgesehen ist, derart ausgebildet ist, dass das Brennstabbündel (1) sich im Wesentlichen in vertikaler Richtung erstreckt, wobei das Brennstabbündel (1) eine Vielzahl von Brennstäben (3a, 3b, 3c) aufweist, welche angereichertes Kernbrennstoffmaterial aufweisen, wobei ein Teil der Brennstäbe Brennstäbe voller Länge (3a, 3c) sind, welche im Wesentlichen von einer ersten Ebene, welche in einem unteren Teil des Brennstabbündels (1) angeordnet ist, zu im Wesentlichen einer zweiten Ebene, welche im oberen Teil des Brennstabbündels angeordnet ist, verläuft und ein anderer Teil der Brennstäbe Brennstäbe einer Teillänge (3b) sind, welche im Wesentlichen von der ersten Ebene und oberhalb davon verlaufen, jedoch nicht so hoch im Brennstabbündel (1) reichen wie die Brennstäbe voller Länge (3a, 3c), **dadurch gekennzeichnet, dass** zumindest ein Teil der Brennstäbe voller Länge (3c), welche am nächsten zu dem Brennstäben der Teillänge (3b) angeordnet sind, ein Kernbrennstoffmaterial aufweisen mit einer mittleren Anreicherung im oberen Teil des Brennstabs (3c), welche geringer ist als eine mittlere Anreicherung im unteren Teil des Brennstabs (3c).

2. Brennstabbündel (1) nach Anspruch 1, **dadurch gekennzeichnet, dass** zumindest ein im Wesentlichen vertikal angeordneter Wasserkanal (8, 10), durch welchen nicht kochendes Wasser von oben nach unten geleitet werden soll, wobei zumindest eine Anzahl der Brennstäbe mit einer Teillänge (3b) in der Nähe des Wasserkanals (8, 10) angeordnet sind.

3. Brennstabbündel (1) nach Anspruch 2, **dadurch gekennzeichnet, dass** der Wasserkanal (8, 10) eine horizontale Querschnittsfläche aufweist, welche im Wesentlichen konstant entlang der Länge des Wasserkanals (8, 10) verläuft.

4. Brennstabbündel (1) nach Anspruch 2, **dadurch gekennzeichnet, dass** der Wasserkanal (10) eine horizontale Querschnittsfläche aufweist, welche im oberen Teil des Wasserkanals (10) größer ist als in seinem unteren Teil, wobei Brennstäbe mit einer Teillänge (3b) am nächsten zum unteren Teil des Wasserkanals (10) angeordnet sind.

5. Brennstabbündel (1) nach einem der vorhergehenden Ansprüche 2 bis 4, **dadurch gekennzeichnet, dass** der Wasserkanal (8. 10) zentral im Brennstabbündel (1) angeordnet ist.

6. Brennstabbündel (1) nach einem der vorhergehenden Ansprüche 2 bis 4, **dadurch gekennzeichnet, dass** das Brennstabbündel (1) zumindest zwei solcher vertikal verlaufender Wasserkanäle (8, 10) aufweist.

7. Brennstabbündel (1) nach einem der vorhergehenden Ansprüche, **dadurch gekennzeichnet, dass** der Wert zwischen der mittleren Anreicherung im oberen Teil des Brennstabs (3c) und der mittleren Anreicherung des unteren Teils des Brennstabs (3c) zwischen 0,75 und 0,95 beträgt.

8. Brennstabbündel (1) nach Anspruch 7, **dadurch gekennzeichnet, dass** der Wert zwischen 0,8 und 0,9 beträgt.

9. Brennstabbündel (1) nach einem der vorhergehenden Ansprüche, **dadurch gekennzeichnet, dass** die mittlere Anreicherung im unteren Teil der Brennstäbe voller Länge (3a), welche nicht am nächsten zu den Brennstäben mit Teillänge (3b) angeordnet sind, höher ist als die mittlere Anreicherung im unteren Teil solcher Brennstäbe voller Länge (3c), welche am nächsten zu den Brennstäben mit Teillänge angeordnet sind.

10. Brennstabbündel (1) nach einem der vorhergehenden Ansprüche, **dadurch gekennzeichnet, dass** zumindest ein Teil der Brennstäbe mit einer Teillänge (3b) sich zwischen 50 und 85 % der Länge der Brennstäbe voller Länge (3a, 3c) erstrecken.

## Revendications

1. Assemblage de combustible (1) pour un réacteur nucléaire à eau bouillante, lequel assemblage de combustible (1) est construit pour être disposé dans le réacteur nucléaire à eau bouillante de telle sorte que l'assemblage de combustible (1) s'étend dans une direction sensiblement verticale, où l'assemblage de combustible (1) comprend une pluralité de barreaux de combustible (3a, 3b, 3c) qui comprennent une matière combustible nucléaire enrichie, où une partie desdits barreaux de combustible sont des barreaux de combustible de longueur intégrale (3a, 3c) qui s'étendent sensiblement depuis un premier niveau situé dans une partie inférieure de l'assemblage de combustible (1) sensiblement jusqu'à un second niveau situé dans une partie supérieure de l'assemblage de combustible (1), et une autre partie desdits barreaux de combustible sont des barreaux de combustible de longueur partielle (3b) qui s'étendent sensiblement depuis ledit premier niveau et vers le haut mais qui n'atteignent pas dans l'assemblage de combustible (1) la même hauteur que les barreaux de combustible de longueur intégrale (3a, 3c), **caractérisé en ce qu'**au moins une partie des barreaux de combustible de longueur intégrale (3c), qui sont disposés le plus près de barreaux de combustible de longueur partielle (3b), comprennent une matière combustible nucléaire ayant un enrichissement moyen dans la partie supérieure du barreau de combustible (3c) qui est inférieur à un enrichissement moyen dans la partie inférieure du barreau de combustible (3c).

2. Assemblage de combustible (1) selon la revendication 1 **caractérisé par** au moins un canal à eau (8, 10) disposé sensiblement verticalement dans lequel de l'eau non bouillante est destinée à circuler de bas en haut, où au moins un certain nombre des barreaux de combustible de longueur partielle (3b) sont disposés à proximité dudit canal à eau (8, 10).

3. Assemblage de combustible (1) selon la revendication 2 **caractérisé en ce que** ledit canal à eau (8, 10) a une aire en section droite horizontale qui est sensiblement constante sur la longueur du canal à eau (8, 10).

4. Assemblage de combustible (1) selon la revendication 2 **caractérisé en ce que** ledit canal à eau (10) a une aire en section droite horizontale qui est plus grande dans la partie supérieure du canal à eau (10) que dans sa partie inférieure, où des barreaux de combustible de longueur partielle (3b) sont disposés le plus près de la partie inférieure du canal à eau (10).

5. Assemblage de combustible (1) selon l'une quelconque des revendications 2-4 **caractérisé en ce que** ledit canal à eau (8, 10) est disposé en position centrale dans l'ensemble de combustible (1).

6. Assemblage de combustible (1) selon l'une quelconque des revendications 2-4 **caractérisé en ce que** l'assemblage de combustible (1) comprend au moins deux canaux à eau (8, 10) disposés verticalement de ce type.

7. Assemblage de combustible (1) selon l'une quelconque des revendications précédentes **caractérisé en ce que** le rapport entre ledit enrichissement moyen dans la partie supérieure du barreau de combustible (3c) et ledit enrichissement moyen dans la partie inférieure du barreau de combustible (3c) est entre 0,75 et 0,95.

8. Assemblage de combustible (1) selon la revendication 7 **caractérisé en ce que** ledit rapport est entre 0,80 et 0,90.

9. Assemblage de combustible (1) selon l'une quelconque des revendications précédentes **caractérisé en ce que** l'enrichissement moyen dans la partie supérieure de tels barreaux de combustible de longueur intégrale (3a) qui ne sont pas disposés le plus près de barreaux de combustible de longueur partielle (3b) est supérieur à l'enrichissement moyen dans la partie supérieure de tels barreaux de combustible de longueur intégrale (3c) qui sont disposés le plus près de barreaux de combustible de longueur partielle.

10. Assemblage de combustible (1) selon l'une quelconque des revendications précédentes **caractérisé en ce qu'**au moins une partie des barreaux de combustible de longueur partielle (3b) atteint entre 50 % et 85 % de la longueur des barreaux de combustible de longueur intégrale (3a, 3c).
